# EUROPEAN PATENT APPLICATION

(11) **EP 4 210 147 A1**
(43) Date of publication of application: **12.07.2023**
(21) Application number: 21864127.2
(22) Date of filing: 19.08.2021
(51) Int. Cl.: H01M 10/48, H02J 7/00

(54) **BATTERY MANAGEMENT SYSTEM**

(30) Priority: 03.09.2020 JP 2020148412
(71) Applicant: Yamaha Hatsudoki Kabushiki Kaisha, Iwata-shi, Shizuoka 438-8501 (JP)
(72) Inventor: YAMAMOTO, Kazuki, Iwata-shi, Shizuoka 438-8501 (JP)
(74) Representative: Grünecker Patent- und Rechtsanwälte PartG mbB
(86) International application number: PCT/JP2021/030421
(87) International publication number: WO 2022/050069

(57) **Abstract**

A battery management system **(100)** according to an embodiment manages information of a battery unit **(200)** that includes a combination of a plurality of battery packs **(10)** including a plurality of cells **(1).** An information processing unit **(30)** obtains battery pack information **(110)** representing a status of the plurality of battery packs **(10)** and obtains battery unit information **(220)** representing a status of the battery unit **(200)** based on the obtained battery pack information **(110).** A server **(300)** receives the battery unit information **(220)** transmitted from the information processing unit **(30).** The server **(300)** transmits at least a portion of the received battery unit information **(220)** to a user terminal device **(400)** of a user using the battery unit **(200).**

## Description

### TECHNICAL FIELD

The present invention relates to a battery management system that manages information of a battery unit that includes a combination of a plurality of battery packs.

### BACKGROUND ART

Machines that operate on electric power supplied from batteries include, for example, electrically powered vehicles and electrically assisted vehicles. Typically, these vehicles are equipped with a battery, and the electric motor can rotate and the vehicle can run by the power supplied from the battery. Batteries are rechargeable and can be recharged for repeated use.

In recent years, from the viewpoint of environmental protection, it has been proposed to reuse batteries used in such vehicles as described above on other machines. Patent Document No. 1 discloses a system that predicts when and how much reusable batteries will be supplied by obtaining information about vehicles in which batteries are being currently used and information about the on-vehicle batteries. This makes it easier for those who reuse batteries to make battery procurement plans and apparatus manufacturing plans.

Thus, by managing the status of individual batteries on the basis of recycling, it is possible to make easier the reuse of batteries.

### CITATION LIST

### PATENT LITERATURE

Patent Document No. 1: International Publication No. 2012/133212

### SUMMARY OF INVENTION

### TECHNICAL PROBLEM

Information about individual batteries as described above is useful when a battery is reused as a used battery by itself or when a battery is disassembled and recycled as a resource. However, when a battery is reused as a used battery by itself, its use is very limited, for example, to vehicles and apparatuses that are compatible with the output characteristics of the used battery. When disassembling and recycling a battery, it is necessary to disassemble and classify the battery so that it can be reused as a resource, which requires labor and cost for recycling.

The present invention provides a battery management system that makes it easier to adapt battery packs to a wide range of uses.

### SOLUTION TO PROBLEM

A battery management system according to an embodiment of the present invention is a battery management system that manages information of a battery unit which includes a combination of a plurality of battery packs including a plurality of cells, the battery management system including: an information processing unit that obtains battery pack information representing the status of the plurality of battery packs and obtains battery unit information representing the status of the battery unit based on the obtained battery pack information; and a server that receives the battery unit information transmitted from the information processing unit and transmits at least a portion of the received battery unit information to a user terminal device of a user using the battery unit.

In a system that uses a battery unit including a combination of a plurality of battery packs, the battery unit information is obtained by the information processing unit and transmitted to the server. Since there is no need to transmit information of each of the plurality of battery packs to the server, it is possible to reduce the amount of data communication between the information processing unit and the server.

The user using the battery unit can properly use the battery unit by referring to the battery unit information transmitted from the server. The user can evaluate the battery unit without having to worry about the status of the individual battery packs, thereby improving the usability for the user.

The provider of the battery unit only needs to disclose the specifications of the battery unit to the user, and does not need to disclose the specifications of the individual battery packs to the user. This increases the variety of battery packs to be used and increases the variety of how battery packs can be combined, making it possible to suit a wide range of applications.

In one embodiment, the battery pack information may include information regarding at least one of voltage, current, output, temperature and SOC (State Of Charge) of each of the plurality of battery packs; and the information processing unit may calculate the battery unit information using the battery pack information.

It is possible to calculate the battery unit information from the contents represented by the battery pack information.

In one embodiment, the battery unit information may include information regarding at least one of voltage, current, output, temperature and SOC (State Of Charge) of the battery unit.

The user using the battery unit can evaluate the battery unit using the battery unit information.

In one embodiment, the information processing unit may transmit a portion of the battery unit information obtained based on the battery pack information to the server.

By transmitting only a portion of the battery unit information to the server, it is possible to further reduce the amount of data communication between the information processing unit and the server.

In one embodiment, the server may transmit a portion of the battery unit information received from the information processing unit to the user terminal device.

By transmitting only a portion of the battery unit information to the user terminal device, it is possible to reduce the amount of data communication between the server and the user terminal device.

In one embodiment, if the server receives a request for transmission from the user terminal device regarding contents of the battery unit information that has not been transmitted to the user terminal device, the server may transmit the requested contents of the battery unit information to the user terminal device.

When the user needs information that has not been transmitted to the user terminal device, the information can be provided to the user, thereby improving the usability for the user.

In one embodiment, if the server receives a request for transmission of the battery pack information from the user terminal device, the server may transmit the request for transmission of the battery pack information to the information processing unit; the information processing unit, having received the request from the server, may transmit the battery pack information to the server; and the server may transmit the battery pack information received from the information processing unit to the user terminal device.

When the user needs the battery pack information, the battery pack information can be provided to the user, thereby improving the usability for the user.

By transmitting the battery pack information only when requested by the user, it is possible to reduce the amount of data communication.

### ADVANTAGEOUS EFFECTS OF INVENTION

In a system that uses a battery unit including a combination of a plurality of battery packs, the battery unit information is obtained by the information processing unit and transmitted to the server. Since there is no need to transmit information of each of the plurality of battery packs to the server, it is possible to reduce the amount of data communication between the information processing unit and the server.

The user using the battery unit can properly use the battery unit by referring to the battery unit information transmitted from the server. The user can evaluate the battery unit without having to worry about the status of the individual battery packs, thereby improving the usability for the user.

The provider of the battery unit only needs to disclose the specifications of the battery unit to the user, and does not need to disclose the specifications of the individual battery packs to the user. This increases the variety of battery packs to be used and increases the variety of how battery packs can be combined, making it possible to suit a wide range of applications.

### BRIEF DESCRIPTION OF DRAWINGS

FIG. **1** is a diagram showing a battery management system **100** according to an embodiment of the present invention.
FIG. **2** is a perspective view of a battery unit **200** according to an embodiment of the present invention.
FIG. **3** is a diagram showing an example of a battery unit **200** and a battery pack **10** according to an embodiment of the present invention.
FIG. **4** is a flow chart showing an operation of the battery unit **200** according to an embodiment of the present invention.
FIG. **5** is a flow chart showing an operation of a server **300** according to an embodiment of the present invention.
FIG. **6** is a chart showing an example of cell information **101,** battery pack information **110** and battery unit information **220** according to an embodiment of the present invention.
FIG. **7** is a flow chart showing another example of an operation of the server **300** according to an embodiment of the present invention.
FIG. **8** is a flow chart showing the process of calculating a second upper limit output of the battery unit **200** according to an embodiment of the present invention.
FIG. **9** is a chart showing an example of calculation of the second upper limit output of the battery unit **200** according to an embodiment of the present invention.
FIG. **10** is a chart showing another example of calculation of the second upper limit output of the battery unit **200** according to an embodiment of the present invention.
FIG. **11** is a diagram showing a plurality of groups obtained from a plurality of battery packs **10** according to an embodiment of the present invention.

### DESCRIPTION OF EMBODIMENTS

A battery management system according to an embodiment of the present invention will be described below with reference to the drawings. In the description below, like components will be denoted by like reference signs, and their descriptions will be omitted where redundant. The following embodiments are examples, and the present embodiment is not limited to the following embodiments.

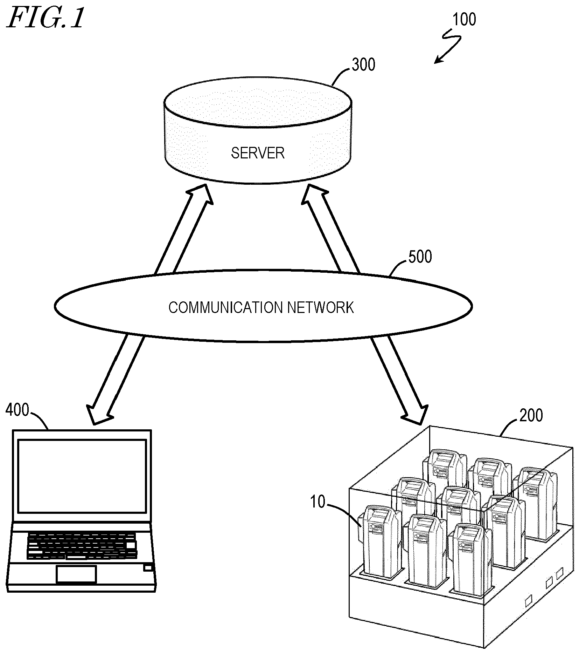

FIG. **1** is a diagram showing a battery management system **100** according to an embodiment of the present invention. The battery management system **100** manages information on a battery unit **200** that includes a combination of a plurality of battery packs **10.** With the battery management system **100,** the battery unit **200** transmits and receives information to and from a server **300** via a communication network **500.** For example, the battery unit **200** transmits battery unit information indicating the status of the battery unit **200** to the server **300.** The communication network **500** is, for example, but not limited to, the Internet.

The server **300** receives the battery unit information transmitted from battery unit **200.** The server **300** transmits and receives information to and from a terminal device **400** of the user using the battery unit **200** via the communication network **500.** For example, the server **300** transmits at least a portion of the received battery unit information to the user terminal device **400.**

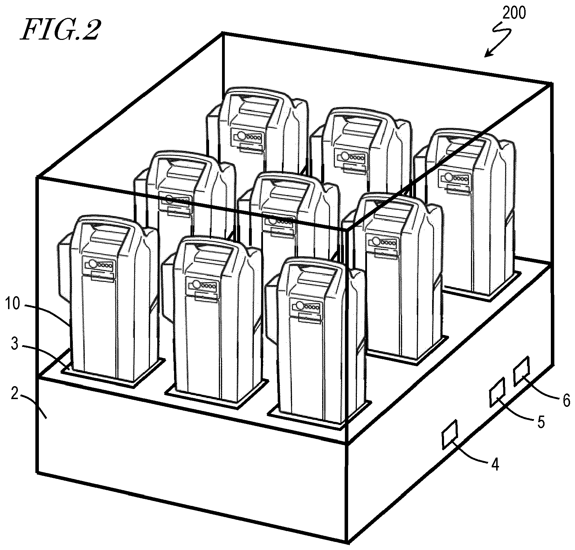

FIG. **2** is a perspective view showing the battery unit **200.** The battery unit **200** includes a combination of a plurality of battery packs **10** for charging and discharging. The battery unit **200** is used, for example, as a stationary energy storage system. The stationary energy storage system can be used, for example, in power generation facilities that use renewable energy, such as solar power generation facilities and wind power generation facilities. The stationary energy storage system can also be used as an emergency power source in the event of a disaster or the like.

The battery unit **200** includes a housing **2** and a plurality of connectors (connecting devices) **3** provided on the housing **2.** The number of connectors **3** can be any number of two or more. A battery pack **10** is connected to each of the plurality of connectors **3.** The battery unit **200** discharges a group including one or more of the plurality of battery packs **10** as a unit.

The housing **2** of the battery unit **200** includes a charging connector **4** and discharging connectors **5** and **6.** The charging connector **4** is connected to a power generator such as, for example, a solar power generator and a wind power generator, and the battery packs **10** can be charged by the power generated by the power generator. For example, the battery packs **10** may be charged by connecting the charging connector **4** to any power source, such as a household power source.

The discharging connectors **5** and **6** are connected to loads (external devices), for example. The power output from the battery packs **10** is output from the discharging connectors **5** and **6.** The discharging connector **5** outputs direct current power. The discharging connector **6** outputs alternating current power. Depending on the application of the battery unit **200,** the battery unit **200** may include only one of the discharging connectors **5** and **6.**

Each of the battery packs **10** can be attached to and detached from the battery unit **200.** The battery packs **10** are, for example, used battery packs that have been installed and used in machines such as electrically powered vehicles and electrically assisted vehicles. Battery packs **10** are removed from those machines and attached to the battery unit **200** for reuse. Note that the battery packs **10** installed in the battery unit **200** are not limited to used battery packs, but can also be new battery packs. A mixture of used battery packs and new battery packs may also be used. Battery packs **10** used in the battery unit **200** may be replaced with other battery packs **10** depending on their conditions. For example, a battery pack **10** that has deteriorated is removed from the battery unit **200** and replaced with another battery pack **10.**

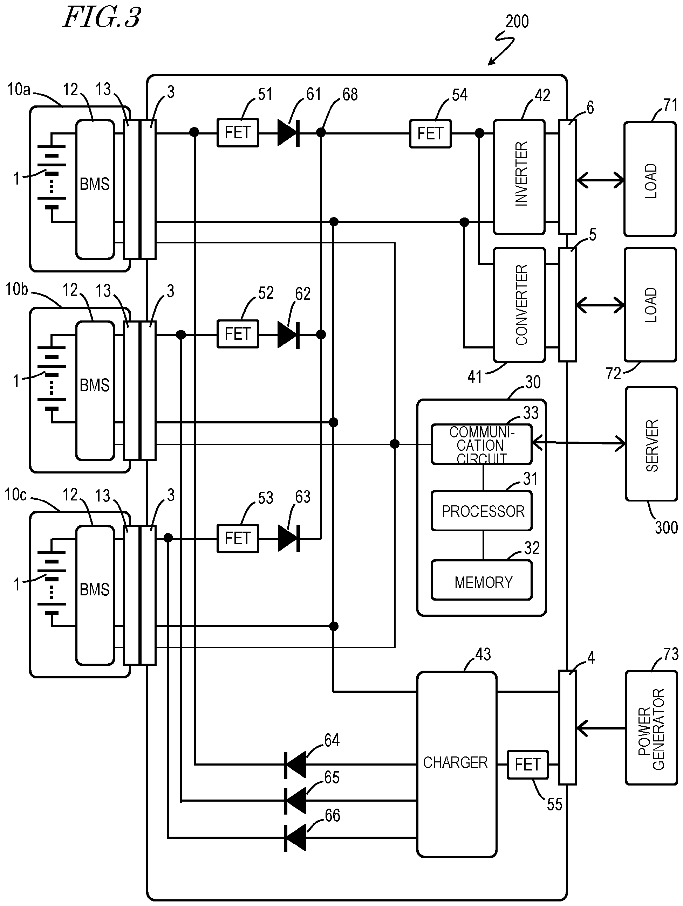

FIG. **3** is a diagram showing an example of the battery unit **200** and the battery packs **10.**

In order to describe an embodiment of the present invention in an easy-to-understand manner, the following description will focus primarily on an embodiment where the battery unit **200** includes three battery packs **10,** but the embodiment of the present invention is not limited thereto. The number of battery packs **10** installed in the battery unit **200** is arbitrary and can be two, four or more, and the present invention is applicable to those embodiments as well. In the example shown in FIG. **3****,** three battery packs **10a, 10b, 10c** are installed as battery packs **10** in the battery unit **200.**

A battery pack **10** includes a plurality of cells **1,** a battery management system (BMS) **12,** and a connector **13.** The BMS **12** controls various operations of the battery pack **10,** such as charging and discharging, and monitors various states of the battery pack **10.** The BMS **12** monitors the voltage, current, temperature, SOC (State of Charge), SOH (State of Health), etc., of the battery pack **10.** The connector **13** of battery pack **10** is connected to the connector **3** of the battery unit **200.** The current output from the plurality of cells **1** is supplied into the battery unit **200** via the BMS **12** and the connector **13.**

In the battery unit **200,** a plurality of battery packs **10a, 10b, 10c** are connected in parallel with each other. The battery pack **10a** is connected to a converter **41** and an inverter **42** via a PWM (Pulse Width Modulation) switching element **51,** a diode **61** and a discharging switching element **54.** The battery pack **10b** is connected to the converter **41** and the inverter **42** via a PWM switching element **52,** a diode **62** and a discharging switching element **54.** The battery pack **10c** is connected to the converter **41** and the inverter **42** via a PWM switching element **53,** a diode **63** and a discharging switching element **54.**

When a load (external device) **71** is connected to the discharging connector **6,** the inverter **42** converts the input direct current voltage to an alternating current voltage, and outputs it to the load **71.** When a load **71** is connected to the discharging connector **5,** the converter **41** adjusts the magnitude of the input direct current voltage, and outputs it to the load **71.** Depending on the application of the battery unit **200,** the battery unit **200** may include only one of the converter **41** and the inverter **42.**

When the power generator **73** is connected to the charging connector **4,** the electric power output from the power generator **73** is input to the charger **43** via the charging connector **4** and the charging switching element **55.** The charger **43** adjusts the magnitude of the voltage and the current, and outputs it to the battery pack **10.** When charging the battery pack **10a,** the current output from the charger **43** is supplied to the battery pack **10a** via the diode **64** and the connector **3.** When charging the battery pack **10b,** the current output from the charger **43** is supplied to the battery pack **10b** via the diode **65** and the connector **3.** When charging the battery pack **10c,** the current output from the charger **43** is supplied to a battery pack **10c** via the diode **66** and the connector **3.**

The switching elements **51, 52, 53, 54, 55** are, for example, field effect transistors (FETs), but they are not limited to field effect transistors, and any switching elements may be used.

An information processing unit **30** is a controller that controls the operation of the battery unit **200.** The information processing unit **30** includes a processor **31,** a memory **32** and a communication circuit **33.** The processor **31** is a signal processing circuit (computer) that controls the operation of the battery unit **200.** Typically, the processor **31** is a semiconductor integrated circuit.

The memory **32** stores a computer program for causing the processor **31** to control the operation of the battery unit **200.** Such a computer program may be installed in the battery unit **200** from a recording medium (a semiconductor memory, an optical disk, etc.) on which it is recorded, or may be downloaded via a telecommunication line such as the Internet. Such a computer program may be installed in the battery unit **200** via wireless communication. Such a computer program may be sold as packaged software. The processor **31** executes the computer program stored in the memory **32** to control the operation of the battery unit **200.**

The processor **31** communicates with the BMS **12** of the battery pack **10** via the communication circuit **33.** The processor **31** communicates with the server **300** via the communication circuit **33.** The processor **31** transmits and receives necessary information to and from the BMS **12** when charging and discharging the battery pack **10.** The processor **31** also receives battery pack information, such as voltage, current and temperature of the battery pack **10,** from the BMS **12.**

The processor **31** controls the operation of the converter **41,** the inverter **42,** the charger **43** and the switching elements **51, 52, 53, 54, 55.** During the discharge operation of the battery unit **200,** the processor **31** turns on the switching element **54.** The processor **31** performs PWM control by repeatedly switching ON/OFF the switching elements **51, 52, 53.** The direct current voltage modulated by PWM control is input to the converter **41** or the inverter **42.** During the charge operation of the battery pack **10,** the processor **31** turns on the switching element **55** and controls the operation of the charger **43** to supply electric power to the battery pack **10** to be charged.

When charging, one of the switching elements **51, 52, 53** that corresponds to the battery pack **10** to be charged may be turned off. For example, assume that the voltage of the battery pack **10c** is the lowest among the battery packs **10a, 10b, 10c,** and that the battery pack **10c** is to be charged. When charging the battery pack **10c,** it is possible to prevent the current for charging from flowing to the discharge side of the circuit by turning off the switching element **53.** This allows the battery pack **10c** to be charged while discharging the battery packs **10a** and **10b.** Thus, with the battery unit **200,** charging and discharging can be done in parallel. The gap between the voltage of the battery pack **10c** to be charged and the voltage of the battery packs **10a** and **10b** to be discharged can be resolved, and after the battery pack **10c** is charged to the desired level, the battery pack **10c** can be discharged together with the battery packs **10a** and **10b.**

When charging, one of the switching elements **51, 52, 53** corresponding to the battery pack **10** to be charged may be turned on. For example, when charging the battery pack **10c,** the switching element **53** is turned on. In this case, part of the current for charging flows to the discharge side of the circuit. In other words, part of the electric power output from the charger **43** is used as electric power for discharge. Since the current output from the battery pack **10c** to be charged decreases, the gap between the voltage of the battery pack **10c** and the voltage of the battery packs **10a** and **10b** can be reduced.

Next, the operation of the battery management system **100** managing battery unit information will be described in more detail.

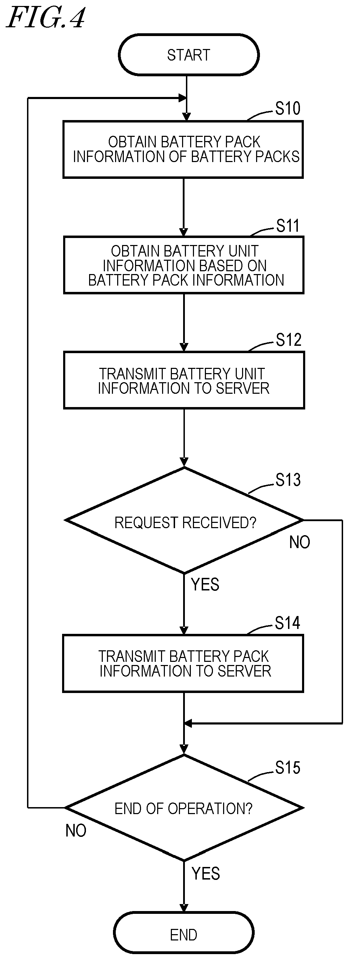

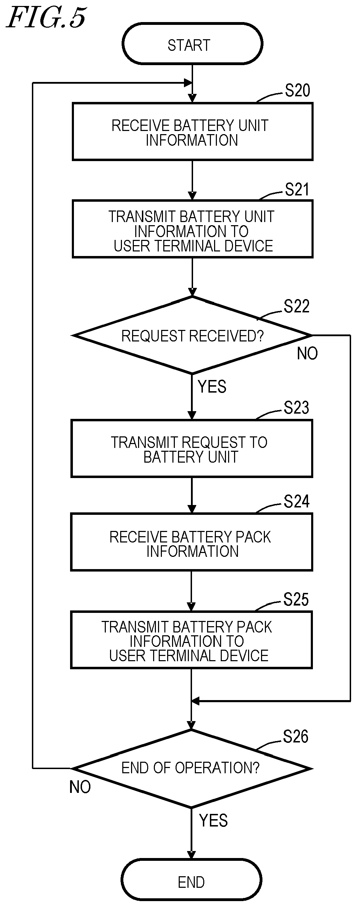

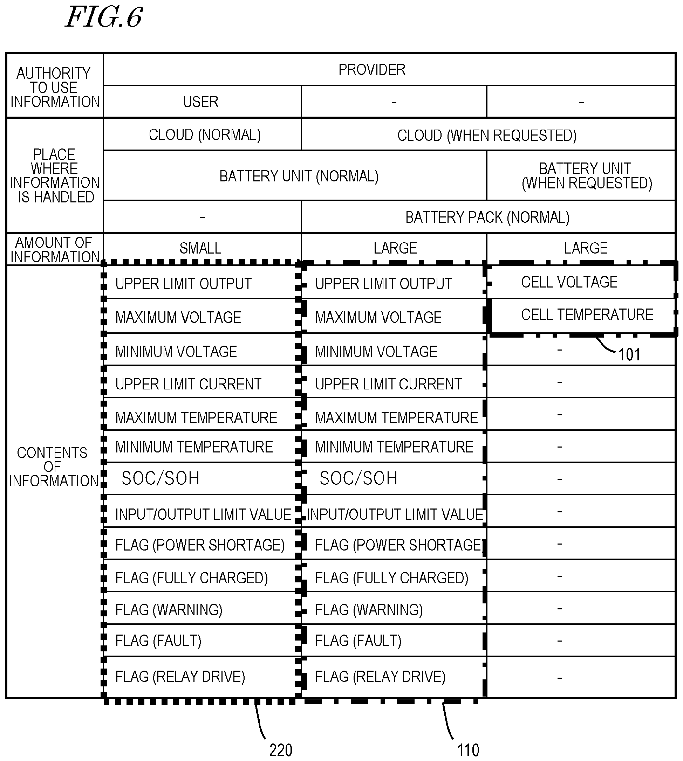

FIG. **4** is a flow chart showing an operation of the battery unit **200.** FIG. **5** is a flow chart showing the operation of the server **300.** FIG. **6** is a chart showing an example of cell information **101,** battery pack information **110** and battery unit information **220.** The information encircled by a two-dot-chain line in FIG. **6** is the cell information **101.** The information encircled by a one-dot-chain line is the battery pack information **110.** The information encircled by a dotted line is the battery unit information **220.**

The BMS **12** (FIG. **3**) of the battery pack **10** detects the cell voltage, which is the voltage of each of the plurality of cells **1.** It also detects the cell temperature, which is the temperature at multiple locations in the collection of cells **1.** The cell information **101** includes these detected values.

The BMS **12** generates the battery pack information **110** using the cell information **101,** etc. The battery pack information **110** is information that indicates the status of each of the plurality of battery packs **10.** The battery pack information **110** includes information regarding voltage, current, output, temperature, SOC, SOH, etc., of each of the plurality of battery packs **10.**

The upper limit output of the battery pack **10** is the upper limit value of electric power that the battery pack **10** can output. The upper limit output varies depending on the current state of the battery pack **10.** For example, the upper limit output varies depending on SOC, temperature, etc. In the following description, the upper limit output of the battery pack **10** is referred to as the "first upper limit output".

The BMS **12** detects the voltage of the battery pack **10.** The BMS **12** obtains the upper limit current of battery pack **10** corresponding to the detected value of voltage. The upper limit current is the upper limit value of current that the battery pack **10** can output when the voltage of the battery pack **10** is of the detected magnitude. For example, the BMS **12** stores in advance a map showing the relationship between the voltage and the upper limit current. The BMS **12** can use such a map to obtain the upper limit current from the detected value of voltage. The BMS **12** obtains the first upper limit output of the battery pack **10** by multiplying the detected value of voltage by the upper limit current value.

The maximum voltage and the minimum voltage of the battery pack **10** represent the maximum value and the minimum value of the voltage of the plurality of cells **1** included in the battery pack **10.** The maximum temperature and the minimum temperature of the battery pack **10** represent the maximum value and the minimum value of the temperatures at a plurality of locations in the collection of cells **1.**

The BMS **12** outputs the battery pack information **110** including those information to the processor **31** (FIG. **3**), and the processor **31** obtains the battery pack information **110** (step S10 in FIG. **4**). Note that the processor **31** may obtain the first upper limit output by multiplying the detected value of voltage by the upper limit current value.

The processor **31** obtains the battery unit information **220** based on the battery pack information **110** (step S11). The battery unit information **220** is information that indicates the status of the battery unit **200.** The battery unit information **220** includes information regarding voltage, current, output, temperature, SOC, SOH, etc., of the battery unit **200.**

The upper limit output of the battery unit **200** is the upper limit value of electric power that the battery unit **200** can output. In the following description, the upper limit output of the battery unit **200** is referred to as the "second upper limit output". The processor **31** calculates the second upper limit output of the battery unit **200** using, for example, the first upper limit output of each of the battery packs **10.**

The maximum voltage and the minimum voltage of the battery unit **200** represent the maximum value and the minimum value of the voltages of the plurality of battery packs **10** included in the battery unit **200.** The maximum temperature and the minimum temperature of the battery unit **200** represent the maximum value and the minimum value of the temperatures of the plurality of battery packs **10** included in battery unit **200.**

The processor **31** transmits the battery unit information **220** to the server **300** using the communication circuit **33** (FIG. **3**) (step S12). Referring to FIG. **1** and FIG. **5****,** the server **300** receives the battery unit information **220** from the battery unit **200** via the communication network **500** (step S20).

The server **300** includes, for example, a processor, a storage device, a communication circuit, etc., not shown. The server **300** stores the received battery unit information **220** in the storage device. The server **300** also transmits the battery unit information **220** to the terminal device **400** of the user using the battery unit **200** (step S21). The user terminal device **400** receives the battery unit information **220** from the server **300** via the communication network **500.** The user can configure the charging and discharging of the battery unit **200** by using the received battery unit information **220.**

With the battery management system **100** of the present embodiment, the battery unit information **220** is obtained by the information processing unit **30** (FIG. **3**) of the battery unit **200** and the obtained battery unit information **220** is transmitted to the server **300.** Since there is no need to transmit the battery pack information **110** of each of the plurality of battery packs **10** to the server **300,** it is possible to reduce the amount of data communication between the information processing unit **30** and the server **300.**

For example, if the battery unit **200** includes 24 battery packs **10,** the amount of data communication becomes large if the battery pack information **110** for the 24 battery packs (FIG. **6**) are transmitted to the server **300.** In the present embodiment, the battery unit information **220** generated by aggregating the battery pack information **110** for the 24 battery packs is transmitted to the server **300.** In this case, the amount of data communication can be reduced to approximately 1/24. Note that the number of battery packs **10** (24) is an example, and the number of battery packs **10** is not limited thereto.

The user using the battery unit **200** can properly use the battery unit **200** by referring to the battery unit information **220** transmitted from the server **300.** The user does not need to worry about how to operate the battery unit **200** while looking at the numerous battery pack information **110.** The user can evaluate the battery unit **200** without having to worry about the status of individual battery packs **10,** thereby improving the convenience for the user side.

The provider of the battery unit **200** only needs to disclose the specifications of the battery unit **200** to the user, and does not need to disclose the specifications of the individual battery packs **10** to the user. This increases the variety of battery packs **10** to be used and increases the variety of how battery packs **10** are combined, making it possible to suit a wide range of applications.

When the user needs the battery pack information **110,** the battery pack information **110** is provided to the user. Referring to FIG. **5****,** the server **300** determines whether a request to transmit the battery pack information **110** has been received from the user terminal device **400** (step S22). If it is determined that the request has been received from the user terminal device **400,** the server **300** transmits a request for transmission of the battery pack information **110** to the battery unit **200** (step S23).

Referring to FIG. **4****,** the processor **31** of the battery unit **200** determines whether a request for transmission of the battery pack information **110** has been received from the server **300** (step S13). If it is determined that the request has been received from the server **300,** the processor **31** transmits the battery pack information **110** to the server **300** (step S14).

Referring to FIG. **5****,** the server **300** receives the battery pack information **110** transmitted from the battery unit **200** (step S24). The server **300** transmits the received battery pack information **110** to the user terminal device **400** (step S25) .

In order to stop the operation of the battery unit **200,** the transmission and reception of information is terminated (step S15, S26).

When the user of the battery unit **200** needs the battery pack information **110,** the battery pack information **110** can be provided to the user, thereby improving the usability for the user. By transmitting the battery pack information **110** only when requested by the user, it is possible to reduce the amount of data communication.

Note that the server **300** may transmit only a portion of the battery unit information **220** to the user terminal device **400.** Then, it is possible to reduce the amount of data communication between the server **300** and the user terminal device **400.**

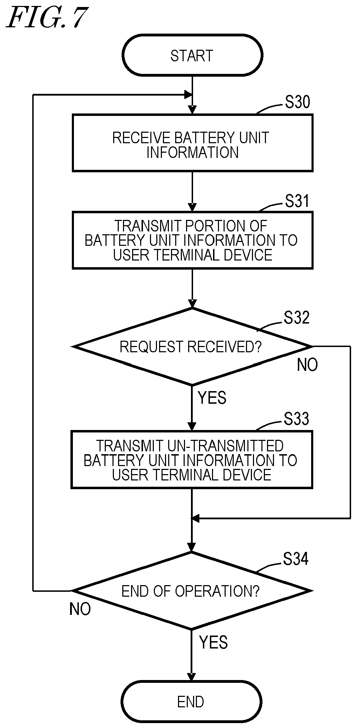

FIG. **7** is a flow chart showing another example of the operation of the server **300.**

Referring to FIG. **4** and FIG. **7****,** the processor **31** of the battery unit **200** transmits the battery unit information **220** to the server **300** (step S12). The server **300** receives the battery unit information **220** from the battery unit **200** (step S30). The server **300** transmits a portion of the received battery unit information **220** to the user terminal device **400** (step S31). Thus, by transmitting only a portion of the battery unit information **220** to the user terminal device **400,** it is possible to reduce the amount of data communication between the server **300** and the user terminal device **400.**

The server **300** determines whether a request for transmission has been received from the user terminal device **400** regarding the contents of the battery unit information **220** has not been transmitted to the user terminal device **400** (step S32). If it is determined that a request has been received, the server **300** transmits the contents of the requested battery unit information **220** to the user terminal device **400** (step S33). Thus, when the user needs information that has not been transmitted to the user terminal device **400,** the information can be provided to the user, thereby improving the usability for the user. In order to stop the operation of the battery unit **200,** the transmission and reception of information is terminated (step S34).

The information processing unit **30** of the battery unit **200** may transmit a portion of the battery unit information **220** to the server **300.** By transmitting only a portion of the battery unit information **220** to the server **300,** it is possible to further reduce the amount of data communication between the battery unit **200** and the server **300.** In this case, if the server **300** receives a request for transmission from the user terminal device **400** regarding the contents of the battery unit information **220** that has not been transmitted to the user terminal device **400,** the information processing unit **30** may transmit the requested contents of the battery unit information **220** to the server **300.** The server **300** transmits the contents of the received battery unit information **220** to the user terminal device **400.** When the user needs information that has not been transmitted to the user terminal device **400,** the information may be provided to the user, thereby improving the usability for the user.

Next, an example of a method for calculating the upper limit output of the battery unit **200** according to the present embodiment will be described.

The processor **31** controls the discharge of a plurality of battery packs **10.** The processor **31** calculates the second upper limit output of the battery unit **200** when discharging one or more battery packs **10.** As described above, the second upper limit output is the upper limit value of electric power that the battery unit **200** can output.

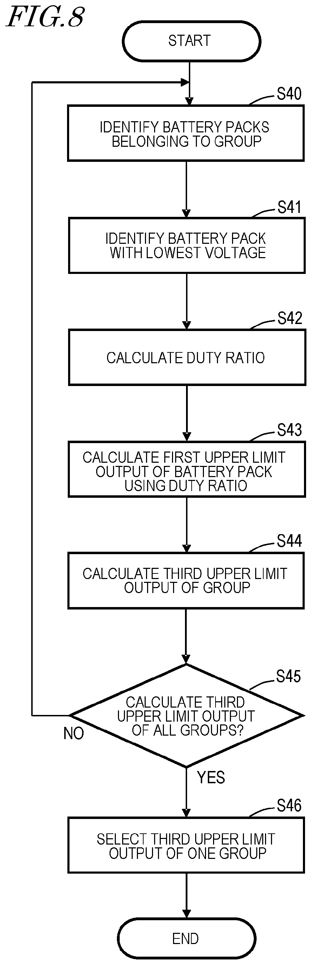

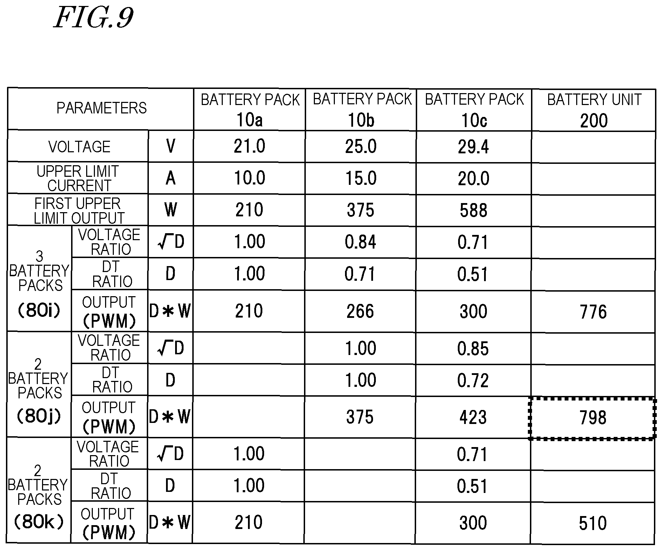

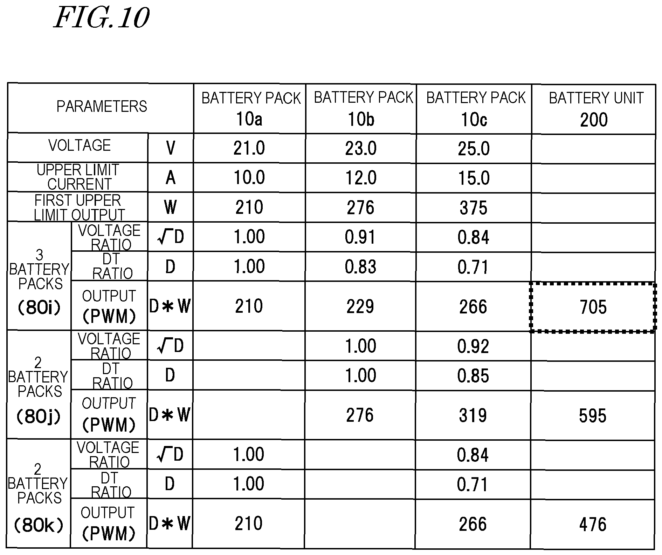

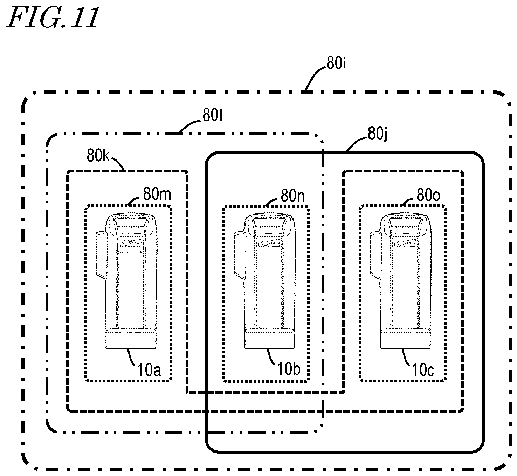

FIG. **8** is a flow chart showing the process of calculating the second upper limit output of the battery unit **200.** FIG. **9** is a chart showing an example of calculation of the second upper limit output of the battery unit **200.** FIG. **10** is a chart showing another example of calculation of the second upper limit output of the battery unit **200.** FIG. **11** is a diagram showing a plurality of groups including one or more of the plurality of battery packs **10.**

Referring to FIG. **11****,** when the number of battery packs **10** is 3, the number of groups containing one or more of the battery packs **10** is 7. FIG. **11** shows those 7 groups **80i, 80j, 80k, 80l**, **80m, 80n, 80o.** The processor **31** calculates the upper limit output for each of the plurality of groups **80i, 80j, 80k, 80l**, **80m, 80n, 80o.** The upper limit output of a group is the upper limit value of electric power that the group can output. In the following description, the upper limit output of the group will be referred to as the "third upper limit output".

The processor **31** receives the detected voltage value and the upper limit current value from the BMS **12** of each battery pack **10.** FIG. **9** shows an example of the voltage and upper limit current for the battery packs **10a, 10b, 10c.** The first upper limit output of each battery pack **10** is obtained by multiplying the voltage by the upper limit current.

Referring to FIG. **8****,** the processor **31** identifies a battery pack **10** belonging to one of the plurality of groups (step S40). For example, the battery packs belonging to the group **80i** are identified as battery packs **10a, 10b, 10c.**

The processor **31** identifies the battery pack with the lowest voltage among the battery packs **10a, 10b, 10c** belonging to the group **80i** (step S41). In the example shown in FIG. **9****,** the battery pack **10a** is identified as the battery pack with the lowest voltage. The processor **31** sets the voltage, 21.0 (V), of the battery pack **10a** with the lowest voltage as the reference voltage.

The processor **31** calculates the ratio between the voltage of each of the other battery packs **10b, 10c** belonging to the group **80i** and the reference voltage. In the example shown in FIG. **9****,** the voltage ratio of the battery pack **10b** is 0.84 and the voltage ratio of the battery pack **10c** is 0.71.

The processor **31** calculates the duty ratio (DT ratio) to be applied to PWM control of each of the battery packs **10a, 10b, 10c** (step S42). The duty ratio is obtained by squaring the voltage ratio.

The processor **31** calculates the first upper limit output of each of the battery packs **10a, 10b, 10c** with the calculated duty ratio applied (step S43). In the example shown in FIG. **9****,** the first upper limit output of the battery pack **10a** is 210 (W), the first upper limit output of the battery pack **10b** is 266 (W), and the first upper limit output of the battery pack **10c** is 300 (W).

The processor **31** adds together the first upper limit outputs with these duty ratios applied to obtain the third upper limit output for the group (step S44). In the example shown in FIG. **9****,** 776 (W) is obtained as the third upper limit output for the group **80i.**

In step S45, the processor **31** determines whether the third upper limit outputs of all groups have been calculated. If the calculation of the third upper limit outputs for all groups has not been completed, the process returns to step S40 and the process is performed for the groups for which calculation has not yet been performed.

In the example shown in FIG. **9****,** the processor **31** identifies the battery pack **10b** with the lowest voltage from the battery packs **10b, 10c** belonging to the group **80j.** The processor **31** sets the voltage, 25.0 (V), of the battery pack **10b** with the lowest voltage as the reference voltage. Then, the same process as described above is performed to obtain 798 (W) as the third upper limit output of the group **80j.**

The processor **31** identifies the battery pack **10a** with the lowest voltage from among the battery packs **10a, 10c** belonging to the group **80k.** The processor **31** sets the voltage, 21.0 (V), of the battery pack **10a** with the lowest voltage as the reference voltage. Then, the same process as described above is performed to obtain 510 (W) as the third upper limit output of the group **80k.** Similarly, the processor **31** calculates the third upper limit output of the group **80l**. In FIG. **9****,** an example of calculation of the third upper limit output of the group **80l** is omitted. If there is one battery pack **10** belonging to a group, such as groups **80m, 80n, 80o** shown in FIG. **11****,** the third upper limit output for that group is the first upper limit output for the battery pack **10** belonging to that group.

When the calculation of the third upper limit output for all groups is completed, the process proceeds to step S46 (FIG. **8**). In step S46, the processor **31** selects the third upper limit output that is the largest among the third upper limit outputs of all groups. The processor **31** sets the selected third upper limit output as the second upper limit output of the battery unit **200.** In the example shown in FIG. **9****,** the third upper limit output, 798 (W), of the group **80j** is the maximum value. The processor **31** sets 798 (W) as the second upper limit output of the battery unit **200.**

FIG. **10** shows another example of calculation of the second upper limit output of the battery unit **200.** The state of the battery packs **10a, 10b, 10c** shown in FIG. **10** is different from FIG. **9****.** The same process as above is performed for the battery packs **10a, 10b, 10c** in the state shown in FIG. **10****.** The processor **31** selects the third upper limit output that is the largest among the third upper limit outputs of all groups. In the example shown in FIG. **10****,** the third upper limit output, 705 (W), of the group **80i** is the maximum value. The processor **31** sets 705 (W) as the second upper limit output of the battery unit **200.**

The processor **31** transmits the battery unit information **220** including the calculated second upper limit output to the server **300** (step S12 in FIG. **4**). The value of the second upper limit output to be transmitted to the server **300** may be smaller than the calculated value of the second upper limit output. By presenting a second upper limit output value that is smaller than the calculated value to the user, it is possible to allow the battery unit **200** to perform a discharge operation with margin.

If the second upper limit output of the battery unit **200** is set based on the third upper limit output, 798 (W), of the group **80j** shown in FIG. **9****,** the processor **31** discharges the battery packs **10b** and **10c** belonging to the group **80j.**

The processor **31** sets the voltage, 25.0 (V), of the battery pack **10b** which has the lowest voltage among the battery packs **10b** and **10c** as the reference voltage. The processor **31** adjusts the voltage, 29.4 (V), output from the other battery pack **10c** to the reference voltage 25.0 (V) through PWM control. By adjusting the voltages output from the battery packs **10b** and **10c** belonging to the group **80j** selected for discharge so as to be of the same magnitude, the battery packs **10b** and **10c** belonging to the group **80j** can be connected in parallel and discharged.

If the second upper limit output of the battery unit **200** is set based on the third upper limit output, 705 (W), of the group **80i** shown in FIG. **10****,** the processor **31** discharges the battery packs **10a, 10b, 10c** belonging to the group **80i.**

The processor **31** sets the voltage, 21.0 (V), of the battery pack **10a** with the lowest voltage among the battery packs **10a, 10b, 10c** as the reference voltage. The processor **31** adjusts the voltage output from the other battery packs **10b, 10c** to the reference voltage 21.0 (V) through PWM control. By adjusting the voltages output from the battery packs **10a, 10b, 10c** belonging to the group **80i** selected for discharge so as to be of the same magnitude, the battery packs **10a, 10b, 10c** belonging to the group **80i** can be connected in parallel and discharged.

As described above, the battery unit **200** of the present embodiment calculates the second upper limit output of the battery unit **200** using the first upper limit output of the plurality of battery packs **10,** and controls the discharge of the plurality of battery packs **10** based on the calculated second upper limit output of the battery unit **200.**

In the present embodiment, at least one of the plurality of battery packs **10** installed in the battery unit **200** may have different specifications from other battery packs **10.** The specifications may differ from each other among the plurality of battery packs **10.**

Regardless of whether the specifications of the plurality of battery packs **10** are the same as or different from each other, the upper limit output is obtainable for each battery pack **10** and the plurality of battery packs **10** are combined based on this upper limit output. Even if the specifications differ from each other among the plurality of battery packs **10,** the upper limit output is a common physical quantity among those battery packs **10.** Therefore, by evaluating each battery pack **10** using the upper limit output, the battery packs **10** can be combined even if the specifications differ among the battery packs **10.** Thus, it is possible to improve the degree of freedom in selecting the battery pack **10.**

Depending on the state of the plurality of battery packs **10,** it may not be the case that the third upper limit output increases as more battery packs **10** are combined. For example, in the state of the battery packs **10a, 10b, 10c** shown in FIG. **9****,** the third upper limit output is largest when two battery packs **10b** and **10c** are combined. The third upper limit output is calculated for each of a plurality of groups that differ from each other in the way battery packs **10** are combined, and the third upper limit output that is the largest among the groups is set as the second upper limit output of the battery unit **200.** By employing the largest third upper limit output obtained from the combination of the plurality of battery packs **10,** it is possible to realize the discharge by making most of the capacity of the plurality of battery packs **10.**

As described with reference to FIG. **3****,** the plurality of battery packs **10** are connected to the converter **41** and the inverter **42** via the diodes **61, 62, 63.** The battery packs **10** included in the group selected for discharge are discharged while being connected in parallel with each other. For example, when the group **80j** is selected, the battery packs **10b** and **10c** are discharged while being connected in parallel with each other. At this time, the positive terminal of the battery pack **10a,** not included in the group **80j,** is connected to a node **68** connected in parallel via the diode **61.** The switching element **51** is left on. Since the voltage of the battery pack **10a** is lower than the reference voltage of the group **80j,** no current flows from battery pack **10a.**

If the power consumption of the load **71** increases rapidly during discharge, the output voltage of the battery unit **200** can drop rapidly. When the voltage of the node **68** becomes lower than the voltage of the battery pack **10a,** current flows through the diode **61** and the electric power is supplied to the load **71** from the battery pack **10a.** Thus, by connecting the unselected battery packs **10** to the node **68** connected in parallel via the diode, it is possible to prevent the battery unit **200** from going down even when the power consumption of the load **71** increases rapidly.

In the description above, the voltage of the battery pack **10** with the lowest voltage among the battery packs **10** included in the group is set as the reference voltage, but the invention is not limited thereto. The voltages of the battery packs **10** other than the battery pack **10** with the lowest voltage may be set to the reference voltage. In this case, battery packs **10** whose voltages are lower than the reference voltage may be adjusted, by boosting the voltages thereof, so that the voltages output from the battery packs **10** included in the same group are of the same magnitude as each other.

An illustrative embodiment of the present invention has been described.

The battery management system **100** according to an embodiment of the present invention manages information of the battery unit **200** which includes a combination of a plurality of battery packs **10** including a plurality of cells **1.** The battery management system **100** includes: the information processing unit **30** that obtains the battery pack information **110** representing the status of the plurality of battery packs **10** and obtains the battery unit information **220** representing the status of the battery unit **200** based on the obtained battery pack information **110;** and the server **300** that receives the battery unit information **220** transmitted from the information processing unit **30** and transmits at least a portion of the received battery unit information **220** to the user terminal device **400** of the user using the battery unit **200.**

In a system using the battery unit **200** including a combination of a plurality of battery packs **10,** the battery unit information **220** is obtained by the information processing unit **30** and transmitted to the server **300.** Since there is no need to transmit information of each of the plurality of battery packs **10** to the server **300,** it is possible to reduce the amount of data communication between the information processing unit **30** and the server **300.**

The user using the battery unit **200** can properly use the battery unit **200** by referring to the battery unit information **220** transmitted from the server **300.** The user can evaluate the battery unit **200** without having to worry about the status of the individual battery packs **10,** thereby improving the usability for the user.

The provider of the battery unit **200** only needs to disclose the specifications of the battery unit **200** to the user, and does not need to disclose the specifications of the individual battery packs **10** to the user. This increases the variety of battery packs **10** to be used and increases the variety of how battery packs **10** can be combined, making it possible to suit a wide range of applications.

In one embodiment, the battery pack information **110** may include information regarding at least one of voltage, current, output, temperature and SOC of each of the plurality of battery packs **10;** and the information processing unit **30** may calculate the battery unit information **220** using the battery pack information **110.** It is possible to calculate the battery unit information **220** from the contents represented by the battery pack information **110.**

In one embodiment, the battery unit information **220** may include information regarding at least one of voltage, current, output, temperature and SOC of the battery unit **200.**

The user using the battery unit **200** can evaluate the battery unit **200** using the battery unit information **220.**

In one embodiment, the information processing unit **30** may transmit a portion of the battery unit information **220** obtained based on the battery pack information **110** to the server **300.**

By transmitting only a portion of the battery unit information **220** to the server **300,** it is possible to further reduce the amount of data communication between the information processing unit **30** and the server **300.**

In one embodiment, the server **300** may transmit a portion of the battery unit information **220** received from the information processing unit **30** to the user terminal device **400.**

By transmitting only a portion of the battery unit information **220** to the user terminal device **400,** it is possible to reduce the amount of data communication between the server **300** and the user terminal device **400.**

In one embodiment, if the server **300** receives a request for transmission from the user terminal device **400** regarding contents of the battery unit information **220** that has not been transmitted to the user terminal device **400,** the server **300** may transmit the requested contents of the battery unit information **220** to the user terminal device **400.**

When the user needs information that has not been transmitted to the user terminal device **400,** the information can be provided to the user, thereby improving the usability for the user.

In one embodiment, if the server **300** receives a request for transmission of the battery pack information **110** from the user terminal device **400,** the server **300** may transmit the request for transmission of the battery pack information **110** to the information processing unit **30;** the information processing unit **30,** having received the request from the server **300,** may transmit the battery pack information **110** to the server **300;** and the server **300** may transmit the battery pack information **110** received from the information processing unit **30** to the user terminal device **400.**

When the user needs the battery pack information **110,** the battery pack information **110** can be provided to the user, thereby improving the usability for the user. By transmitting the battery pack information **110** only when requested by the user, it is possible to reduce the amount of data communication.

### INDUSTRIAL APPLICABILITY

The present invention is particularly useful in technical fields in which a plurality of battery packs are used in combination.

### REFERENCE SIGNS LIST

1: Cell, 2: Housing, 3: Connector (connecting device), 4: Charging connector, 5: Discharging connector, 6: Discharging connector, 10: Battery pack, 12: Battery management system (BMS), 13: Connector, 20: Battery unit, 30: Information processing unit (controller), 31: Processor, 32: Memory, 33: Communication circuit, 41: Converter, 42: Inverter, 43: Charger, 51, 52, 53: PWM switching element, 54: Discharging switching element, 55: Charging switching element, 61, 62, 63, 64, 65, 66: Diode, 68: Node, 71: Load (external device), 73: Power generator, 80: Group, 100: Battery management system, 101: Cell information, 110: Battery pack information, 200: Battery unit, 220: Battery unit information, 300: Server, 400: User terminal device, 500: Network

## Claims

1. A battery management system for managing information of a battery unit that includes a combination of a plurality of battery packs including a plurality of cells, the battery management system comprising:
an information processing unit that obtains battery pack information representing a status of the plurality of battery packs and obtains battery unit information representing a status of the battery unit based on the obtained battery pack information; and
a server that receives the battery unit information transmitted from the information processing unit and transmits at least a portion of the received battery unit information to a user terminal device of a user using the battery unit.

2. The battery management system according to claim 1, wherein:
the battery pack information includes information regarding at least one of voltage, current, output, temperature and SOC (State Of Charge) of each of the plurality of battery packs; and
the information processing unit calculates the battery unit information using the battery pack information.

3. The battery management system according to claim 1 or 2, wherein the battery unit information includes information regarding at least one of voltage, current, output, temperature and SOC (State Of Charge) of the battery unit.

4. The battery management system according to any one of claims 1 to 3, wherein the information processing unit transmits a portion of the battery unit information obtained based on the battery pack information to the server.

5. The battery management system according to any one of claims 1 to 4, wherein the server transmits a portion of the battery unit information received from the information processing unit to the user terminal device.

6. The battery management system according to claim 5, wherein when the server receives a request for transmission from the user terminal device regarding contents of the battery unit information that has not been transmitted to the user terminal device, the server transmits the requested contents of the battery unit information to the user terminal device.

7. The battery management system according to any one of claims 1 to 6, wherein:
when the server receives a request for transmission of the battery pack information from the user terminal device, the server transmits the request for transmission of the battery pack information to the information processing unit;
the information processing unit, having received the request from the server, transmits the battery pack information to the server; and
the server transmits the battery pack information received from the information processing unit to the user terminal device.
